# EUROPEAN PATENT SPECIFICATION

(11) **EP 1 718 169 B1**
(45) Date of publication and mention of the grant of the patent: **19.09.2012**
(21) Application number: 05706779.5
(22) Date of filing: 22.02.2005
(51) Int. Cl.: A23L 1/314, A23B 4/12, A23B 4/20, A23L 1/317, A23L 1/325

(54) **MEAT BASED FOOD PRODUCT COMPRISING LACTOBIONIC ACID**
NAHRUNGSMITTELPRODUKT AUF FLEISCHGRUNDLAGE, DAS LACTOBIONSÄURE ENTHÄLT
PRODUIT ALIMENTAIRE A BASE DE VIANDE CONTENANT DE L'ACIDE LACTOBIONIQUE

(30) Priority: 23.02.2004 DK 200400282
(43) Date of publication of application: 08.11.2006
(73) Proprietor: Novozymes A/S, 2880 Bagsvaerd (DK)
(72) Inventor: NIELSEN, Per, Munk,, DK-3400 Hilleroed (DK)
(86) International application number: PCT/DK2005/000117
(87) International publication number: WO 2005/079604

(56) References cited:
- EP-A- 0 354 262
- WO-A-00/30460
- CH-A- 356 659
- FR-A- 556 064
- GB-A- 1 325 727
- US-A- 2 930 702
- US-A- 6 045 990

## Description

### TECHNICAL FIELD

The present invention relates to a meat based food product comprising lactobionic acid and a method for preparing the food product.

### BACKGROUND OF THE INVENTION

When freezing and thawing meat products, as well as when cooking meat products, water tends to be lost resulting in decreased yield and decreased water content of the meat product. Meat products are often marinated or pickled before cooking or freezing in order to improve taste and tenderness, and it is known that addition of e.g. starch or milk proteins to the marinade may decrease the loss upon cooking. EP 0354262 discloses a method for marinating or pickling a meat product comprising treatment with a marinade or pickling medium containing modified starch to decrease the water loss upon cooking.

WO00/30460 discloses application to food of a dilute detergent surfactant composition which comprises, among others, an electrolyte, which may, for example, be calcium lactobionate. US2,930,702 discloses a method for prolonging the shelf life of poultry by immersing into a solution of antibiotic and a solid non-toxic water-soluble acid, which may, e.g., be lactobionic acid. FR556064 discloses a preservation product for meat comprising organic acid, lactose and etheric mustard oil and mentions breakdown products of lactose derived via formation of lactobionic acid. CH356659 discloses an antibiotic compound for preservation of poultry which may comprise lactobionic acid.

It is an object of the present invention to provide a meat based food product, which has a reduced loss of water when thawed after freezing and/or when cooked.

### SUMMARY OF THE INVENTION

The inventors have found that when lactobionic acid is included in a meat based product the water loss upon freezing and subsequent thawing and/or upon cooking is reduced compared to a meat based product not including lactobionic acid.

The invention thus relates in a first aspect to a method for producing a food product comprising: a) contacting meat with lactobionic acid; and b) producing a food product from the meat contacted with lactobionic acid wherein the food product comprises between 0.1 and 20 % (weight/weight) lactobionic acid. In a second aspect the invention relates to a meat based food product comprising between 0.1 and 20 % (weight/weight) lactobionic acid, and in a further aspect to use of lactobionic acid for producing a meat based food product comprising between 0.1 and 20 % (weight/weight) lactobionic acid.

### DETAILED DESCRIPTION OF THE INVENTION

A food product according to the invention is any product suitable for use as food for humans or animals. In one embodiment of the invention a food product is a pet food product or a feed product for feeding animals. In another embodiment a food product is a snack product.

### Lactobionic acid

Lactobionic acid (4-O-beta-D-galactopyranosyl-D-gluconic acid) according to the invention may be from any source known in the art. Lactobionic acid may e.g. be produced by oxidation of lactose. Oxidation of lactose may e.g. be achieved enzymatically by an enzyme capable of oxidising lactose to lactobionic acid, an example of such an enzyme is the carbohydrate oxidase disclosed in WO 9931990. Lactose to be oxidised to lactobionic acid may e.g. be derived from milk, whey, or permeate from ultrafiltration of e.g. milk or whey. If lactose is derived from milk, whey, or permeate it may be further purified, or oxidised directly in the milk, whey, or permeate. If lactose is oxidised directly in milk, whey, or permeate, the resulting milk, whey, or permeate with lactobionic acid may be used as it is for producing a meat based food product or the lactobionic acid may be purified before use. Lactobionic acid may be used directly as its free acid or it may be neutralised e.g. with sodium, calcium, magnesium, or potassium hydroxide to achieve a desired pH of the lactobionic acid preparation. Lactobionic acid may also be used as a salt, e.g. as a sodium, potassium, magnesium, or calcium salt. Lactobionic acid or salts of lactobionic acid may be used in pure form or may be dissolved in an aqueous liquid before use.

The amount of lactobionic acid in the final meat based food product may be any amount between 0.1 and 20 % (weight/weight) which is suitable to achieve the desired effect on water loss upon freezing and subsequent thawing and/or upon cooking. In one embodiment of the invention the amount of lactobionic acid is sufficient to reduce the water loss upon freezing and subsequent thawing of the meat based food product compared to the water loss of a similar food product prepared without lactobionic acid. The water loss upon freezing and subsequent thawing of the meat based food product prepared with lactobionic acid may e.g. be reduced by 2% or more, such as by 5% or more, by 10% or more, or by 15% or more, compared to the water loss of a similar food product prepared without lactobionic acid. In another embodiment the amount of lactobionic acid is sufficient to reduce the water loss upon cooking of the meat based food product compared to the water loss of a similar food product prepared without lactobionic acid. The amount of lactobionic acid will be in the range 0.1-20% (weight/weight), such as 0.2-10%, or 0.5-5%, of the finished meat based food product.

### Meat

Meat according to the invention is any kind of tissue derived from any kind of animal. Meat according to the invention may be tissue comprising muscle fibres derived from an animal. Meat may be animal muscle, e.g. whole animal muscle or pieces of meat cut from animal muscle. Additionally meat according to the invention may be inner organs of an animal, such as e.g. heart, liver, kidney, spleen, thymus, and brain. Meat may be ground or minced or cut into smaller pieces by any other appropriate way known in the art. Meat according to the invention may be derived from any kind of animal, e.g. from cow, pig, lamb, sheep, goat, chicken, hen, turkey, ostrich, pheasant, deer, elk, reindeer, buffalo, bison, antelope, camel, kangaroo; any kind of fish, e.g. sprat, cod, haddock, tuna, sea eel, salmon, herring, sardine, mackerel, horse mackerel, saury, round herring, pollack, flatfish, anchovy, pilchard, blue whiting, pacific whithing, trout, catfish, bass, capelin, marlin, red snapper, Norway pout and/or hake; any kind of shellfish, such as e.g. clam, mussel, scallop, cockle, periwinkle, snail, oyster, shrimp, lobster, langoustine, crab, crayfish, cuttlefish, squid, and/or octopus. In one embodiment of the invention the meat is beef, pork, chicken, and/or turkey. In another embodiment the meat is fish meat.

A meat based food product according to the invention is any food product based on meat. A meat based food product may comprise non-meat ingredients such as e.g. water, salt, flour, milk protein, vegetable protein, starch, hydrolysed protein, phosphate, acid, and/or spices. Meat may account for e.g. 30-100 % (weight/weight), such as 50-100%, 60-100%, or 70-100%, of a meat based food product.

In one embodiment a meat based product is a processed meat product, such as e.g. a sausage, meat loaf, comminuted meat product, ground meat, bacon, polony, salami, or pate. A processed meat product may further comprise e.g. salts, spices, milk protein, vegetable ingredients, colouring agents, and/or texturising agents. A processed meat product may e.g. be an emulsified meat product, manufactured from a meat based emulsion. The meat based emulsion may be cooked or baked, e.g. in a baking form or after being filled into casing of e.g. plastic, collagen, cellulose, or natural casing. A processed meat product may also be a restructured meat product, such as e.g. restructured ham. A meat product of the invention may undergo processing steps such as e.g. salting, e.g. dry salting; curing, e.g. brine curing; drying; smoking; fermentation; cooking; slicing; and/or shredding.

### Method for producing a meat based food product

A meat based food product comprising lactobionic acid may be produced by contacting meat with lactobionic acid and producing a meat based food product from the treated meat. The meat will usually be raw when being contacted with lactobionic acid, but may also e.g. be heat treated, precooked, or irradiated before contact with lactobionic acid. The meat may also have been frozen before contact with lactobionic acid. Contacting meat with lactobionic acid may be done by adding lactobionic acid to meat. Contacting meat with lactobionic acid may be achieved by mixing meat, e.g. pieces of meat, minced meat, or a meat based emulsion, with lactobionic acid and, where applicable, other ingredients used to form the meat based food product by any method known in the art. Before contact with the meat, lactobionic acid may be mixed with other ingredients, e.g. to form a marinade or pickling liquid, such as e.g. water, salt, flour, milk protein, vegetable protein, starch, hydrolysed protein, phosphate, acid, and/or spices. The amount of lactobionic acid in a marinade may be adjusted as to achieve the desired final amount of lactobionic acid in the meat based food product. Contacting meat, e.g. whole animal muscle or pieces of animal muscle, with lactobionic acid may be achieved by marinating and/or tumbling the meat with a marinade comprising lactobionic acid. If the meat product is a processed meat product, e.g. an emulsified meat product, lactobionic acid may e.g. be mixed into a meat based emulsion, or into any other form of meat based mixture used to form the processed meat product. In one embodiment of the invention lactobionic acid is added to a marinade or a pickling liquid. Lactobionic acid may be added to meat by injection and/or pumping of a liquid comprising lactobionic acid into the meat by any method known in the art for injecting and/or pumping a liquid into meat. A meat based food product of the invention may be pieces of meat that have been contacted with lactobionic acid and packed.

In one embodiment of the invention the meat based food product is frozen after contacting meat with lactobionic acid. The meat product may be frozen at any temperature below 0°C, such as between -1 and -80°C, between -5 and -50°C, or between -10 and -35°C.

A meat based food product according to the invention may be cooked after contacting meat with lactobionic acid. Cooking may be done by any method known in the art such as e.g. in boiling water, in an oven, by microwave heating, by grilling, by pressure cooking, by retorting packed in cans, and/or by frying. In one embodiment of the invention the meat based food product is heated, e.g. to 50-140°C, such as 60-120°C, 60-100°C, or 70-100°C.

In one embodiment of the invention a meat based food product is a processed fish product. A processed fish product may e.g. be fish filet or shellfish that has been contacted with an aqueous solution of lactobionic acid and packed. Shellfish will often be cooked before or after contact with lactobionic acid, before being packed. Processed fish products will often be frozen after contact with lactobionic acid. A processed fish product may also be smoked fish.

In one embodiment of the invention a processed fish product is surimi. Surimi is a food product produced from fish meat by washing out soluble components of the fish meat and adding stabilising ingredients. Surimi may e.g. be used to produce fish cake, fish pudding, fish balls, and shellfish analogs e.g. crab sticks. Surimi is usually produced from lean white-fleshed fish, e.g. pacific whiting, pollack, croaker, lizardfish, pike, conger, or New Zealand Hoki, which are washed, headed, eviscerated, filleted and minced. The minced meat is washed repeatedly with fresh water and may undergo a dehydration step, e.g. using screw presses. Additives may be included for stabilisation, flavour, and texture regulation, e.g. sugars, sorbitol, starch, polydextrose, egg white, whey protein, soy protein, vegetable oil, shellfish extract, shellfish flavour, phosphate, salt, seasoning, water, and/or protease inhibitors. Lactobionic acid will usually be added in the same manner and at the same process step as stabilisers and other additives are usually added to surimi in a conventional process. The products may be formed as desired, e.g. to resemble crab, shrimp, or lobster meat. Additionally a heating step may be included to facilitate gelatination. Colorants, e.g. carmine, caramel, paprika, or annato extract, may be added to create the desired appearance of the product.

A meat based food product of the invention may be used for direct consumption or it may undergo further processing before consumption. A meat based food product of the invention may be used as raw material or ingredient for production of other food products.

### EXAMPLES

### Example 1

### Drip loss of meat product upon freezing and thawing

### Raw materials:

Chopped, lean pork meat.
WPC: Lacprodan 80, whey protein concentrate with 80% protein in dry matter (Aria Foods, Denmark).
WPP: whey permeate powder containing 83% lactose (EPI, France).
Ca-LBA-WPP: Lactose oxidase treated whey permeate powder adjusted to pH 6.52 with Ca(OH)₂. The product was produced by enzymatic catalysed oxidation of whey permeate powder. The whey permeate powder was dissolved as 6% powder in water and lactose oxidase was added. Temperature during reaction was 49°C and the liquid was recirculated by pumping to assure air in the mixture. pH was 6.5 before enzyme addition and reduced to 3.7 when the reaction was terminated by heating to 85°C. The liquid was concentrated by evaporation and pH adjusted to 6.52 by addition of Ca(OH)₂. The process had converted 41 % of the lactose to lactobionic acid.

### Marinade compositions:

| Marinade number | 1 | 2 | 3 | 4 | 5 |
|---|---|---|---|---|---|
| Ingredients (% weight/weight): | | | | | |
| Water | 85.4 | 85.4 | 88.4 | 88.4 | 96.4 |
| WPC | 3 | 3 | 0 | 0 | 0 |
| WPP | 8 | 0 | 8 | 0 | 0 |
| Ca-LBA-WPP | 0 | 8 | 0 | 8 | 0 |
| NaCl | 3.6 | 3.6 | 3.6 | 3.6 | 3.6 |

All marinades were pH adjusted to pH 6.05.

25 g of the respective marinades was added to 75 g of meat and mixed for 5 minutes. The samples were filled in plastic bags, shaped identically, and frozen overnight. Next day all samples were placed in a refrigerator overnight for thawing, and on the following day corners were cut of the plastic bags and expelled liquid collected and weighed.

### Results:

| | Drip loss (g liquid expelled) | | |
|---|---|---|---|
| Marinade used | Sample 1 | Sample 2 | Average |
| 1 | 7.73 | 8.15 | 7.94 |
| 2 | 7.23 | 5.59 | 6.41 |
| 3 | 8.67 | 7.72 | 8.19 |
| 4 | 6.15 | 6.27 | 6.21 |
| 5 | 11.87 | 11.44 | 11.66 |

Meat products formed using marinades 2 and 4 comprising lactobionic acid showed the lowest drip loss upon freezing and subsequent thawing.

## Claims

1. A method for producing a food product comprising:
a) contacting meat with lactobionic acid; and
b) producing a food product from the meat contacted with lactobionic acid;
wherein the food product comprises between 0.1 and 20 % (weight/weight) lactobionic acid.

2. The method of claim 1 comprising mixing minced meat with lactobionic acid.

3. The method of claim 1 comprising treating pieces of meat with lactobionic acid.

4. The method of claim 1 comprising tumbling meat with lactobionic acid.

5. The method of claim 1 comprising marinating meat with lactobionic acid.

6. The method of any of the preceding claims comprising freezing the food product.

7. The method of any of the preceding claims comprising heating the food product.

8. The method of any of the preceding claims wherein the meat is fish meat.

9. The method of claim 8 wherein the food product is surimi.

10. The method of any of the claims 1-8 wherein the food product is an emulsified meat product.

11. The method of any of the claims 1-7 and 10 wherein the meat is from beef, pork, chicken, and/or turkey.

12. The method of any of the preceding claims wherein the lactobionic acid is in the form of sodium, potassium, magnesium, or calcium lactobionate.

13. The method of any of the preceding claims wherein the lactobionic acid is produced by enzymatic oxidation of lactose.

14. A meat based food product comprising between 0.1 and 20 % (weight/weight) lactobionic acid.

15. Use of lactobionic acid for producing a meat based food product comprising between 0.1 and 20 % (weight/weight) lactobionic acid.

## Patentansprüche

1. Verfahren zum Herstellen eines Lebensmittelprodukts, umfassend:
a) Inkontaktbringen von Fleisch mit Laktobionsäure; und
b) Herstellen eines Lebensmittelprodukts aus dem mit der Laktobionsäure in Kontakt gebrachten Fleisch;
wobei das Lebensmittelprodukt zwischen 0,1 und 20% (Gew./Gew.) Laktobionsäure enthält.

2. Verfahren nach Anspruch 1, umfassend das Mischen von Hackfleisch mit Laktobionsäure.

3. Verfahren nach Anspruch 1, umfassend das Behandeln von Fleischstücken mit Laktobionsäure.

4. Verfahren nach Anspruch 1, umfassend das Rollieren von Fleisch mit Laktobionsäure.

5. Verfahren nach Anspruch 1, umfassend das Marinieren von Fleisch mit Laktobionsäure.

6. Verfahren nach einem beliebigen der vorhergehenden Ansprüche, umfassend das Einfrieren des Lebensmittelprodukts.

7. Verfahren nach einem beliebigen der vorhergehenden Ansprüche, umfassend das Erhitzen des Lebensmittelprodukts.

8. Verfahren nach einem beliebigen der vorhergehenden Ansprüche, wobei das Fleisch Fischfleisch ist.

9. Verfahren nach Anspruch 8, wobei das Lebensmittelprodukt Surimi ist.

10. Verfahren nach einem beliebigen der Ansprüche 1-8, wobei das Lebensmittelprodukt ein emulgiertes Fleischprodukt ist.

11. Verfahren nach einem beliebigen der Ansprüche 1-7 und 10, wobei das Fleisch vom Rind, Schwein, Huhn und/oder Truthahn stammt.

12. Verfahren nach einem beliebigen der vorhergehenden Ansprüche, wobei die Laktobionsäure in der Form von Natrium-, Kalium-, Magnesium-, oder Calciumlaktobionat ist.

13. Verfahren nach einem beliebigen der vorhergehenden Ansprüche, wobei die Laktobionsäure durch enzymatische Oxidation von Laktose hergestellt wird.

14. Fleischbasiertes Lebensmittelprodukt, umfassend zwischen 0,1 und 20% (Gew./Gew.) Laktobionsäure.

15. Verwendung von Laktobionsäure zum Herstellen eines fleischbasierten Lebensmittelprodukts, das zwischen 0,1 und 20% (Gew./Gew.) Laktobionsäure umfasst.

## Revendications

1. Procédé de production d'un produit alimentaire comprenant :
a) la mise en contact de viande avec de l'acide lactobionique ; et
b) la production d'un produit alimentaire à partir de la viande mise en contact avec de l'acide lactobionique ;
où le produit alimentaire comprend entre 0,1 et 20 % (poids/poids) d'acide lactobionique.

2. Procédé selon la revendication 1, comprenant le mélange de viande hachée avec de l'acide lactobionique.

3. Procédé selon la revendication 1, comprenant le traitement de morceaux de viande avec de l'acide lactobionique.

4. Procédé selon la revendication 1, comprenant le culbutage de viande avec de l'acide lactobionique.

5. Procédé selon la revendication 1, comprenant le marinage de viande avec de l'acide lactobionique.

6. Procédé selon l'une quelconque des revendications précédentes, comprenant la congélation du produit alimentaire.

7. Procédé selon l'une quelconque des revendications précédentes, comprenant le chauffage du produit alimentaire.

8. Procédé selon l'une quelconque des revendications précédentes, dans lequel la viande est de la viande de poisson.

9. Procédé selon la revendication 8, dans lequel le produit alimentaire est du surimi.

10. Procédé selon l'une quelconque des revendications 1 à 8, dans lequel le produit alimentaire est un produit de viande émulsifiée.

11. Procédé selon l'une quelconque des revendications 1 à 7 et 10, dans lequel la viande provient de boeuf, de porc, de poulet et/ou de dinde.

12. Procédé selon l'une quelconque des revendications précédentes, dans lequel l'acide lactobionique est sous la forme de lactobionate de sodium, de potassium, de magnésium ou de calcium.

13. Procédé selon l'une quelconque des revendications précédentes, dans lequel l'acide lactobionique est produit par une oxydation enzymatique du lactose.

14. Produit alimentaire à base de viande comprenant entre 0,1 et 20 % (poids/poids) d'acide lactobionique.

15. Utilisation d'acide lactobionique pour la production d'un produit alimentaire à base de viande comprenant entre 0,1 et 20 % (poids/poids) d'acide lactobionique.
